# DEMANDE DE BREVET EUROPEEN

(11) **EP 0 936 190 A1**
(43) Date de publication de la demande: **18.08.1999**
(21) Numéro de dépôt: 99460012.0
(22) Date de dépôt: 12.02.1999
(51) Int. Cl.: C02F 3/12, C02F 11/08

(54) **Procédé de traitement d'effluants par voie biologique et oxydation ne produisant pas ou peu de boues en excès**

(30) Priorité: 16.02.1998 FR 9802042
(71) Demandeur: OTV S.A., 94417 Saint-Maurice Cédex (FR)
(72) Inventeur: Djafer, Malik, 92100 Boulogne Billancourt (FR); Luck, Francis, 93160 Noisy-Le-Grand (FR)
(74) Mandataire: Vidon, Patrice

(57) **Abrégé**

Procédé de traitement d'effluents par voie biologique et oxydation ne produisant pas ou peu de boues en excès.

L'invention concerne un procédé de traitement d'un effluent en vue de son épuration comprenant au moins une étape de traitement biologique (1) dudit effluent conduisant à la production de boues biologiques, caractérisé en ce qu'il comprend au moins une étape consistant à faire subir à au moins une partie desdites boues provenant de ladite étape de traitement biologique une oxydation par voie humide (6) mettant en oeuvre au moins un agent oxydant à une température comprise entre 80°C et 200°C et à une pression comprise entre 1 et 40 bar et une étape consistant à réacheminer (7) au moins une partie des boues ainsi oxydées vers ladite étape de traitement biologique. Un tel procédé permet de réduire, voire de supprimer, la production des boues en excès.

## Description

L'invention concerne le domaine du traitement biologique des effluents en vue de leur épuration, tels que notamment, mais non exclusivement les eaux usées urbaines ou industrielles.

Dans le cadre des traitements biologiques classiques, l'effluent à épurer est mis en contact avec une biomasse permettant de dégrader la pollution contenue dans celui-ci. La mise en oeuvre de tels traitements conduit à une augmentation progressive de la quantité de biomasse et à la nécessité d'évacuer la biomasse en excès dite "boues en excès".

Pour faire face à la quantité sans cesse croissante de ces boues biologiques en excès, et du problème de leur dévolution finale, différentes techniques ont été proposées pour permettre de réduire les volumes de boues à évacuer. Parmi ces techniques on peut citer notamment l'incinération et le séchage. Il existe également d'autres solutions qui consistent à à faire subir à ces boues des traitements mécaniques et/ou biologiques et/ou chimiques afin d'obtenir des produits pouvant être valorisés dans le domaine de l'agriculture.

Une autre alternative pour réduire la quantité de boues en excès produites consiste à utiliser des moyens permettant de réduire la production de boues en amont, c'est-à-dire au cours du processus biologique de dépollution des eaux.

Ainsi le procédé décrit dans les brevets américains US-A-5,240,599, US-A - 5,282,980 et US-A-5,522,553, permet de réduire de 60% la production de boues générées par un bassin de boues activées. La technique utilisée consiste à installer un broyeur mécanique dans la boucle de recirculation de la liqueur mixte provenant du bassin de traitement biologique qui permet de provoquer l'éclatement d'une partie des cellules bactériennes constituant lesdites boues. La technologie utilisée provoque cet éclatement sous l'action de pressions locales très élevées puis détente brusque (cavitation).

Il existe également d'autres méthodes basées sur des techniques de broyage des boues et qui se distinguent les unes des autres par la technologie de broyage employée.

Toutes ces techniques sont relativement simples à mettre en oeuvre mais présentent l'inconvénient de ne pas permettre de supprimer complètement la production des boues en excès.

D'autres solutions, basées sur l'action d'agents oxydants, peuvent également être mises en oeuvre. Ainsi le procédé décrit dans la demande de brevet Européen EP-A-0 645 347, propose de faire agir de l'ozone sur la liqueur mixte recirculée dans le bassin biologique afin de réduire la production de boues en excès. Les principaux paramètres d'optimisation de ce procédé sont : le taux d'ozone appliqué, le temps de contact des boues avec l'ozone, le pH et le volume de boues à ozoner. L'inconvénient principal de cette technique résulte des difficultés inhérentes à l'utilisation du réactif très oxydant qu'est l'ozone.

L'objectif de la présente invention est de proposer un procédé permettant de diminuer la quantité des boues en excès produites classiquement lors d'un traitement biologique des eaux ne présentant pas les inconvénients ci-dessus mentionnés des procédés de l'état de la technique.

Un autre objectif de la présente invention est de décrire un tel procédé permettant, dans certaines conditions, de ne pas générer d'excès de boues biologiques produites d'ordinaire par de tels traitements, c'est-à-dire offrant l'opportunité de supprimer complètement ou presque complètement la production de boues en excès.

Encore un autre objectif de la présente invention est de divulguer des installations pour la mise en oeuvre d'un tel procédé.

Ces différents objectifs, ainsi que d'autres qui apparaîtront par la suite, sont atteints grâce à l'invention qui concerne un procédé de traitement d'un effluent en vue de son épuration comprenant au moins une étape de traitement biologique dudit effluent conduisant à la production de boues biologiques, caractérisé en ce qu'il comprend au moins une étape consistant à faire subir à au moins une partie desdites boues provenant de ladite étape de traitement biologique une oxydation par voie humide mettant en oeuvre au moins un agent oxydant, à une température comprise entre 80°C et 200°C et à une pression comprise entre 1 et 40 bar et une étape consistant à réacheminer les boues ainsi oxydées vers ladite étape de traitement biologique.

On notera que, dans le cadre du procédé selon l'invention, les boues traitées pourront se présenter plus ou moins diluées. Dans certains cas, elle proviendront d'une étape de clarification ou encore d'épaississement. Dans d'autres cas, elles proviendront directement d'un bassin biologique et se présenteront sous la forme d'une liqueur mixte.

L'invention propose donc de traiter tout ou partie des boues biologiques provenant de l'étape de traitement biologique selon la méthode d'oxydation par voie humide (OVH, en anglais "Wet Air Oxidation") puis de renvoyer les boues ainsi oxydées vers l'étape de traitement biologique. Il a en effet été constaté qu'il était ainsi possible de réduire considérablement la production des boues biologiques en excès, et même de supprimer totalement la production de telles boues.

On notera que la méthode d'oxydation par voie humide a été abondamment décrite dans l'art antérieur et notamment dans les brevets américains US-A-4,721,575 et US-A-4,272,383. Cette technique vise à réaliser une oxydation poussée de la matière organique contenue dans des solutions présentant une forte concentration en matière organique peu ou non biodégradable. Elle consiste à mettre en contact un gaz oxydant avec une telle solution à une température élevée tout en maintenant la solution à l'état liquide. Dans ce but, les conditions de mise en oeuvre d'une telle méthode sont classiquement comprises, pour la pression, entre environ 15 et environ 160 bars et, pour la température entre environ 150°C et environ 350°C. Cette méthode a notamment été appliquée au traitement des effluents urbains et industriels. Toutefois, il n'avait jamais été proposé, à la connaissance de la Demanderesse, de l'utiliser dans le cadre du traitement des boues biologiques en vue de leur élimination par réemploi en tête d'un traitement biologique.

On notera de plus que, selon une caractéristique essentielle de la présente invention, l'oxydation par voie humide des boues biologiques est mise en oeuvre dans des conditions opératoires douces à savoir une température comprise entre 80°C et 200°C et une pression comprise entre 1 et 40 bar.

De telles conditions douces de traitement permettent d'inactiver la biomasse de façon à la solubiliser mais sans provoquer la formation de résidus minéraux insolubles (oxydes, carbonates, sulfates, etc.). Une telle minéralisation poussée de la biomasse entraînerait en effet une précipitation de minéraux qui ne pourraient pas être éliminés lors de l'étape de traitement biologique, précipitation qui gênerait le fonctionnement de cette étape et limiterait les possiblités de réduction de la quantité de boue à évacuer.

Le procédé selon l'invention permet ainsi de réduire de manière considérable la production de boues biologiques dites "en excès", voire de supprimer complètement cette production.

Préférentiellement, ladite étape d'oxydation par voie humide desdites boues est effectuée à une température comprise entre 120°C et 180°C.

Egalement préférentiellement, ladite étape d'oxydation par voie humide desdites boues est effectuée à une pression comprise entre 2 et 20 bar.

Selon une variante préférentielle de l'invention, la durée de ladite étape d'oxydation par voie humide est comprise entre environ 10 mn et environ 180 mn.

Egalement préférentiellement, ledit procédé comprend une étape consistant à ajuster le pH desdites boues à une valeur comprise entre 1 et 11 préalablement à ladite étape d'oxydation.

L'agent oxydant qui sera utilisé au cours de l'étape d'oxydation par voie humide pourra être de l'air, de l'oxygène, de l'air enrichi en oxygène, du peroxyde d'hydrogène seul ou en combinaison avec l'un des trois composés cités précédemment.

Avantageusement, ce composé oxydant sera utilisé selon un rapport oxydant / demande chimique en oxygène (DCO) des boues compris entre 0.2 et 1.5 environ.

Selon une variante du procédé, ladite étape d'oxydation en milieu humide est effectuée en présence d'au mois un catalyseur homogène destiné à augmenter l'efficacité d'abattement de la DCO, de la solubilisation de la DCO et de la réduction des matières en suspension (MES) des boues à traiter. Préférentiellement, ledit catalyseur est un métal appartenant au groupe comprenant le manganèse, le fer, le cobalt, le nickel, le cuivre, le zinc et les mélanges et composés d'un ou plusieurs d'entre eux. De façon particulièrement avantageuse, il s'agit d'un composé soluble du cuivre (tel que le sulfate de cuivre) ou du zinc ou leur mélange.

Selon une autre variante de l'invention, le procédé proposé peut également comprendre une étape consistant à réacheminer au moins une partie des gaz d'oxydation produits lors de ladite étape d'oxydation par voie humide vers ladite étape de traitement biologique. En effet, le réacheminement des boues oxydées vers l'étape de traitement biologique entraine une augmentation de la charge organique à traiter lors de cette étape L'élimination de cette charge organique nécessite donc une augmentation de l'apport en oxygène lors de l'étape de traitement biologique. Cet apport complémentaire d'oxygène peut être en partie ou complètement effectué par l'intermédiaire des gaz de réaction issus de l'étape d'oxydation par voie humide.

L'efficacité du procédé proposé par la présente invention dépend essentiellement de la puissance du traitement d'oxydation, de la concentration des boues, mais également du taux de traitement des boues par ladite étape d'oxydation par voie humide. Avantageusement ce taux de traitement sera compris entre 1,1 et 2 c'est-à-dire que, par rapport à un procédé classique dans lequel on extrait une quantité de boues en excès de 1, on traitera 1,1 à 2 fois cette quantité par l'étape d'oxydation par voie humide dans le cadre de l'invention. Ce taux de traitement pourra être optimisé de façon à autoriser la suppression totale ou quasi totale des boues en excès. Dans ce but, ce taux de traitement sera avantageusement compris entre 1,2 et 1,5 et sera, de façon préférée entre toutes égal à 1,5.

On notera que, préférentiellement, l'étape de traitement biologique d'où proviendront les boues, mettra en oeuvre au moins une étape aérobie. Toutefois, il n'est pas exclu que le procédé selon l'invention puisse être adapté aux boues provenant des digesteurs.

L'invention concerne également une installation spécialement conçue pour la mise en oeuvre du procédé décrit ci-dessus, ladite installation comprenant au moins un dispositif de traitement biologique d'un effluent conduisant à la production de boues biologiques et des moyens d'évacuation d'au moins une partie desdites boues biologiques, et étant caractérisée en ce que qu'elle comprend de plus au moins un réacteur d'oxydation par voie humide d'au moins une partie desdites boues biologiques provenant dudit dispositif de traitement biologique, et des moyens de réacheminement desdites boues oxydées vers ledit dispositif de traitement biologique.

Selon une variante, ledit dispositif de traitement biologique inclut au moins un bassin de boues activées muni de moyens d'aération, au moins un dispositif de décantation de la liqueur mixte provenant dudit bassin de boues activées, et des moyens d'acheminement d'au moins une partie des boues provenant dudit dispositif de décantation vers ledit réacteur d'oxydation par voie humide.

Lorsque le traitement biologique mis en oeuvre dans l'installation aura pour objectif d'abattre non seulement la pollution carbonée de l'effluent mais également sa pollution azotée, il pourra être intéressant de "sortir" l'étape de nitrification du bassin de boues activées et de prévoir au moins un dispositif à bactéries fixées mis en oeuvre pour nitrifier ledit effluent, afin de ne pas avoir à augmenter la taille du bassin de boues activées du fait de la réduction de l'âge de boue. Cette configuration permet de maintenir un âge de boue compatible avec la fonction de nitrification.

Un tel dispositif pourra être prévu entre ledit bassin de boues activées et ledit dispositif de décantation ou encore à la sortie de ce dispositif de décantation. Il pourra notamment s'agir d'un dispositif de type biofiltre commercialisé par la Demanderesse sous la marque BIOSTYR ou la marque BIOCARBONE ou équivalent ou encore d'un dispositif à bactéries fixées sur lit fluidisé tel que le dispositif commercialisé par la Demanderesse sous la marque BIOLIFT ou un dispositif équivalement. Les eaux de lavage des dispositifs à bactéries fixées pourront avantageusement être renvoyées vers le dispositif de décantation.

Selon une variante intéressante de l'invention, l'installation selon l'invention peut aussi inclure des moyens d'acheminement d'au moins une partie des gaz d'oxydation provenant dudit réacteur d'oxydation par voie humide vers ledit dispositif de traitement biologique.

Le procédé selon l'invention, ainsi que les différents avantages qu'il présente, seront plus facilement compris grâce à la description qui va suivre d'un mode non limitatif de mise en oeuvre de celui-ci.

Selon cet exemple de réalisation, le procédé a été testé sur une installation pilote dans le cadre du traitement d'eaux usées urbaines présentant les caractéristiques suivantes:
- Demande chimique en oxygène : 400-600 mgDCO/L,
- Concentration en azote total : 70 mg NT/L ;
- Concentration en azote ammoniacal : 60 mg N-NH₄⁺/L,
- Concentration en nitrates : 0 mg N-NO₃⁻/L,
- Concentration de matières en suspension : 0,05-0,1 gMES/L.

L'installation pilote utilisée est composée de deux colonnes de traitement de 10 L chacune dont l'une sert de témoin. Ces colonnes présentent une hauteur de 1 m 50 et un diamètre intérieur 10,6 cm. Les eaux usées y ont été traitées biologiquement par des boues activées. A cet effet, de l'air a été injecté dans les colonnes, de manière à y maintenir une teneur en oxygène dissous comprise entre 2,5 et 3 gO₂/L.

Le débit d'alimentation des colonnes en eaux usées dépend de la teneur en DCO (Demande Chimique en Oxygène). En approximant DCO _ 2 DBO (Demande Biologique en Oxygène), ce débit a été ajusté pour conserver une DBO d'environ 1 kg/j.m³ de colonne (environ 2 kg DCO/j.m³ de colonne).

Le temps de rétention hydraulique a été le même dans les deux colonnes, compris entre 0,2 j et 0,3 j selon la DCO de l'eau d'alimentation (600 et 400 mg DCO/L, respectivement).

Afin de permettre de dissocier les temps de séjour hydrauliques et les âges de boues, et d'obtenir une grande fiabilité des bilans de matières, on a utilisé dans cette installation pilote des membranes immergées d'ultrafiltration (diamètre des pores de 0,1 mm) plutôt que des dispositifs de décantation à la sortie des colonnes de traitement.

Les boues en excès ont été extraites automatiquement et/ou manuellement de manière à maintenir une concentration de matières en suspension de 4 g/L.

Dans la colonne servant de référence les boues en excès ont été extraites automatiquement tous les jours.

Selon l'invention, les boues provenant de l'autre colonne ont été oxydées par voie humide puis réinjectées dans la colonne. Dans le cadre de cet essai pilote, l'oxydation par voie humide (OVH) a été mise en oeuvre en discontinu. Les boues prélevées ont donc été conservées au réfrigérateur (à environ 4°C) en attendant le traitement d'oxydation. Les boues oxydées ont également été conservées au réfrigérateur (à environ 4°C) avant d'être réinjectées dans la colonne.

L'OVH a été effectuée dans un autoclave en acier inoxydable présentant une capacité de 1 litre et pourvu de moyens d'agitation. Les boues à oxyder ont préalablement été concentrées par centrifugation (à 4000 tr/min pendant 10 min) : par ce traitement, on a récupéré, d'une part, le surnageant des boues (qui a été conservé) et, d'autre part, 200mL de concentrat (constitué des culots de boues et d'un peu de surnageant) à environ 20 g MES/L. La concentration des boues permet d'obtenir une plus grande exothermie de la réaction d'oxydation.

Le concentrat des boues a été placé dans l'autoclave qui a été fermé hermétiquement. La pression d'oxygène a été introduite de manière à obtenir un rapport massique O₂/DCO de 0,8 qui correspond à une injection d'oxygène pur à 4 bar (à température ambiante) pour le traitement d'un litre de boues à 4 g MES/L.

La température de traitement a été fixée à 150°C. Pendant la montée en température le milieu a été agité à environ 600 tr/min. Le palier à 150°C a été maintenu pendant 30 min, avec une agitation de 1200 tr/min. La descente en température a été effectuée en maintenant l'agitation à 600 tr/min. Lorsque la température est passée en dessous de 30°C, l'autoclave a été dégazé et ouvert. La solution de boues traitées et le surnageant obtenu lors de la centrifugation préalable ont été mélangés pour retrouver le volume initial. Le mélange a ensuite été placé dans le réfrigérateur en attendant d'être recirculé dans la colonne.

Dans le cadre du traitement classique, on a effectué des prélèvement quasi-journaliers de boues en excès à la sortie de la première colonne. Les prélèvements effectués ont été d'environ 1 L, correspondant à un âge de boues dans la première colonne de 10 jours environ.

Dans le cadre du procédé selon l'invention un premier test a été effectué en prélevant une quantité de boues correspondant à 1,2 fois le volume de boues en excès du procédé classique pour être oxydée par OVH.

Les matières en suspension (MES) et les matières volatiles en suspension (MVS) ont été mesurées quotidiennement et à heure fixe dans les deux colonnes de traitement.

Les résultats obtenus grâce à l'installation pilote sont décrits ci-après.

Au cours de l'oxydation par voie humide, le pH des boues centrifugées s'est abaissé de 7,5 à 5,5 (7 après dilution dans le surnageant). La teneur en MES des boues après OVH a été approximativement divisée par 2. La DCO soluble a augmenté d'un facteur 30 (à environ 2,3 gDCO/L). La baisse de près de 20% de la DCO totale atteste de la solubilisation de la biomasse dans l'autoclave.

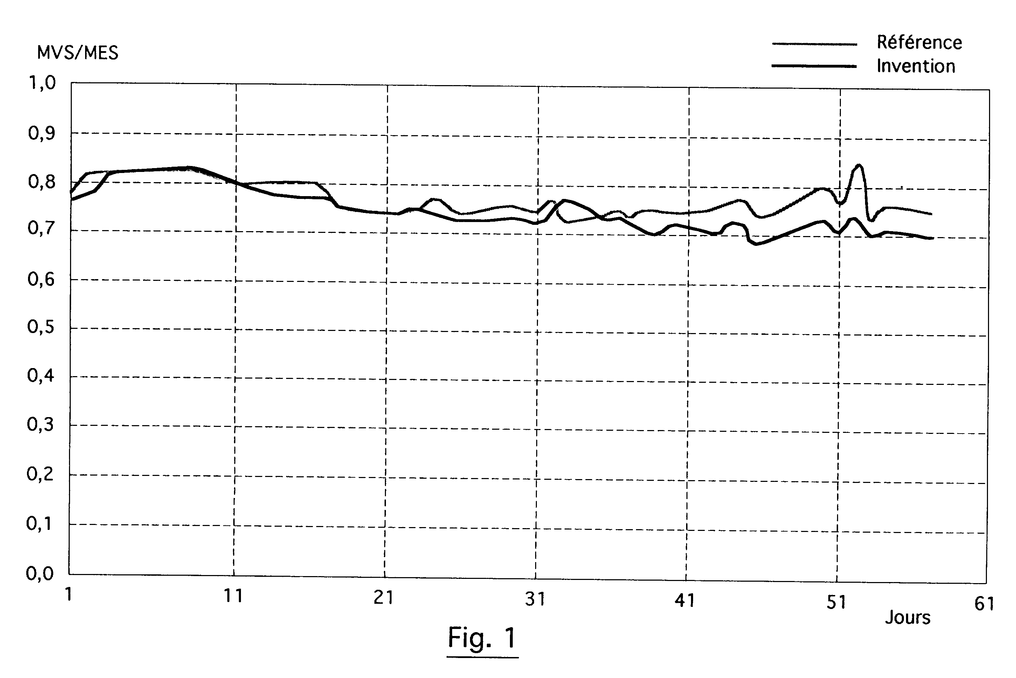

Les valeurs des MES et MVS durant l'étude sont présentées sur la Figure 1. Le rapport MVS/MES tend approximativement vers 72% dans la colonne utilisée pour la mise en oeuvre du procédé selon l'invention contre 77% pour le traitement classique. Les boues subissant le traitement d'oxydation sont donc légèrement plus minéralisées que les boues classiques, mais aucune accumulation significative de matière minérale n'est obtenue dans la colonne dans laquelle le procédé selon l'invention a été mis en oeuvre.

L'efficacité du traitement est basée essentiellement sur l'abattement de la DCO entre l'eau d'alimentation et la sortie. Les résultats concernant cet abattement sont donnés dans le tableau ci-après.

| | | | | | | | |
|---|---|---|---|---|---|---|---|
| Jours | 9 | 25 | 32 | 36 | 43 | 50 | 58 |
| DCO sortie | | | | | | | |
| colonne témoin (mgO₂/L) | 31 | 33 | 15 | 18 | 16 | 19 | 13 |
| | | | | | | | |
| DCO sortie | | | | | | | |
| colonne procédé | | | | | | | |
| selon l'invention (mgO₂/L) | 34 | 39 | 20 | 20 | 24 | 19 | 14 |

Les valeurs de ce tableau montrent que la qualité de l'effluent issu du traitement selon l'invention comportant une oxydation des boues et leur recyclage est quasi équivalente à celle obtenue par le procédé classique.

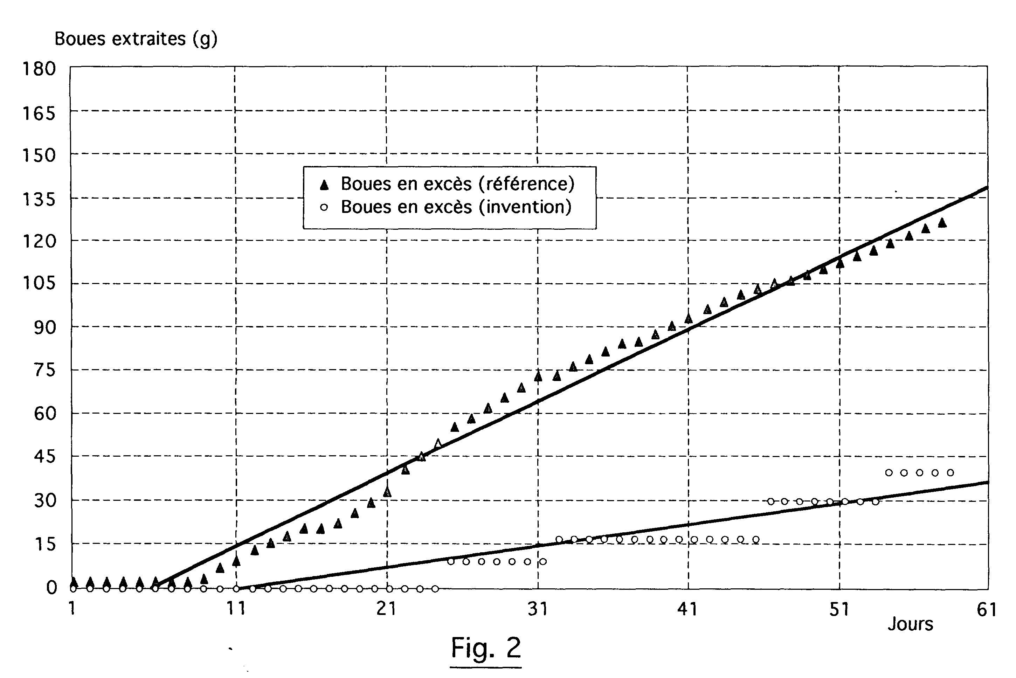

Les valeurs des extractions des boues obtenues dans les deux colonnes sur les 50 derniers jours de la période d'essai ont par ailleurs été mesurées et sont données sur la figure 2 et résumées dans le tableau ci-après.

| | Colonne de référence | Colonne OVH |
|---|---|---|
| Volume de boues prélevées (L) | 34,5 | 8,5 |
| Masse de MES prélevées (g) | 130 | 38,5 |

Les valeurs figurant sur ce tableau montrent clairement que le procédé selon l'invention permet de réduire nettement la quantité de boues en excès. La réduction de la production de boues en excès est d'environ 70 %.

Un deuxième test a été effectué exactement dans les mêmes conditions mais avec un taux de traitement de 1,5 c'est-à-dire en prélevant une quantité de boues correspondant à 1,5 fois le volume de boues en excès du procédé classique.

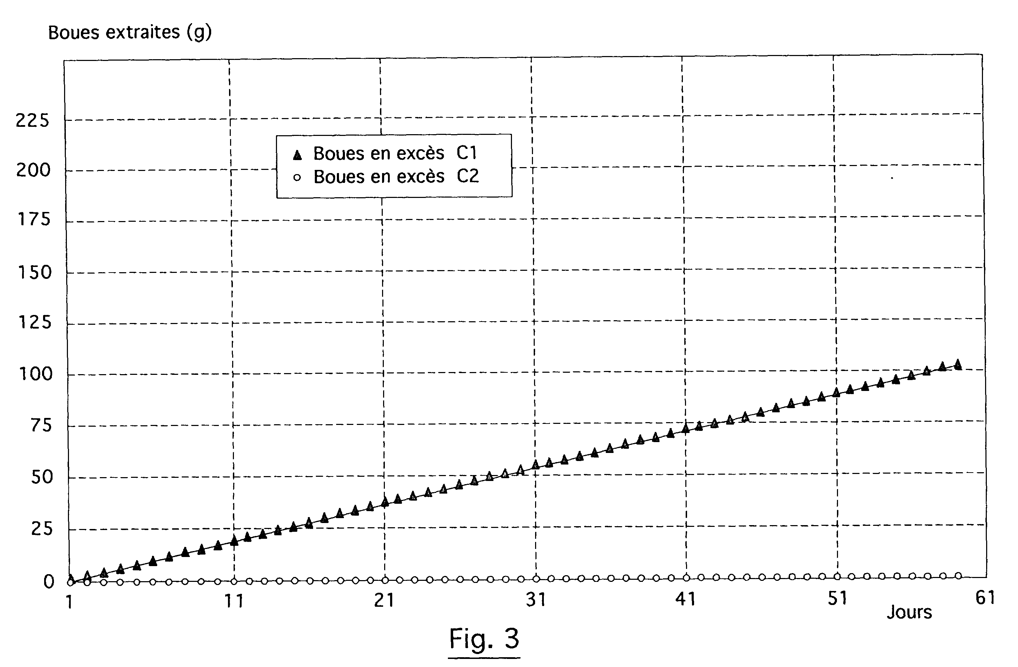

Les valeurs des extractions des boues obtenues dans les deux colonnes sur les 54 derniers jours de la période d'essai ont été mesurées et sont données sur la figure 3 et résumées dans le tableau ci-après.

| | Colonne de référence | Colonne OVH |
|---|---|---|
| Volume de boues prélevées (L) | 33,3 | 0,1 |
| Masse de MES prélevées (g) | 103 | 0,39 |

Les valeurs figurant sur ce tableau montrent également clairement que l'intérêt du procédé selon l'invention, celui-ci permettant plus de 99 % de réduction de la production de boues.

On comprendra que l'installation pilote utilisée dans le cadre de l'exemple de réalisation du procédé décrit ci-dessus, ne sera pas utilisée à l'échelle industrielle.

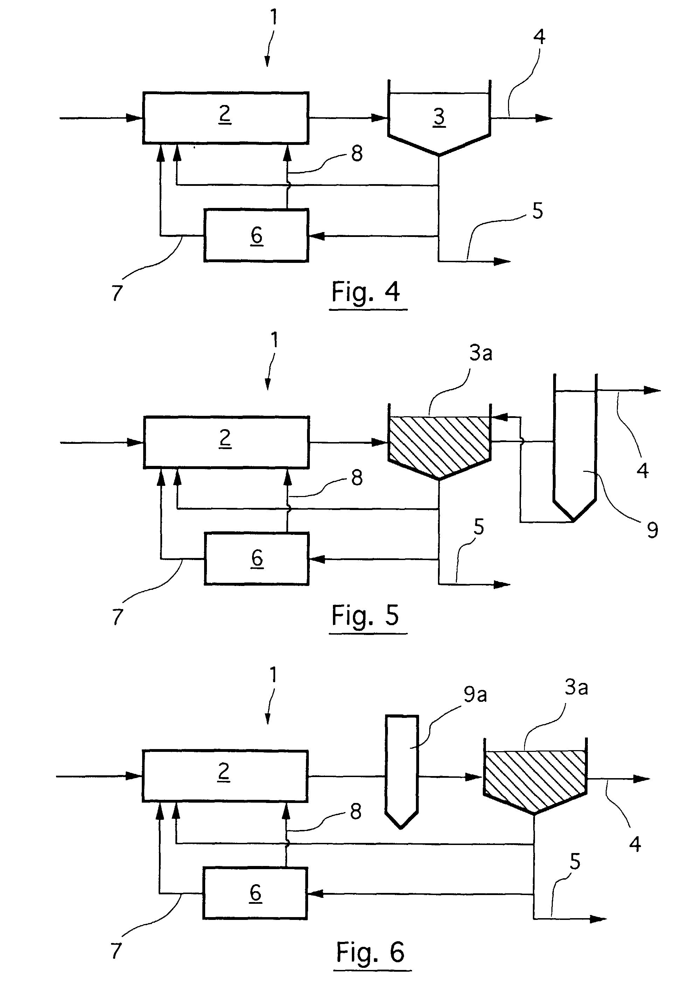

Des installations pouvant être utilisées à l'échelle industrielle sont décrites ci-après en référence aux figures 4 à 6.

En référence à la figure 4, l'installation comprend un dispositif de traitement biologique 1 d'un effluent constitué par un bassin de boues activées 2 pourvu de moyens d'aération (non représentés). La liqueur mixte provenant de ce bassin biologique 2 est acheminée vers un décanteur 3 d'où l'effluent épuré est extrait en 4. Les boues provenant de ce décanteur 3 sont pour partie évacuées en 5 tandis qu'une autre partie est acheminée vers un réacteur d'oxydation par voie humide 6 via une canalisation 11 et qu'une troisième partie est envoyée sans oxydation dans le bassin 2 pour servir de source de carbone. Les boues oxydées sont réacheminées vers le bassin biologique 1 grâce à une canalisation 7 prévue à cet effet. L'invention comprend par ailleurs des moyens d'acheminement 8 d'au moins une partie des gaz d'oxydation provenant dudit réacteur d'oxydation par voie humide 6 vers ledit bassin de boues activées 2.

Selon les figures 5 et 6, la nitrification de l'effluent est effectuée dans un dispositif à bactéries fixées, permettant de maintenir une biomasse nitrifiante dans l'installation de traitement sans avoir à modifier sa taille. En effet, seules les bactéries nitrifiantes évacuées avec les eaux de lavage et mélangées aux bactéries hétérotrophes traitant la pollution carbonée, seront traitées par l'unité d'OVH.

Dans l'installation selon la figure 5, celui-ci est constitué par une dispositif à bactéries fixées 9 sur un matériau support constitué de billes de polystyrène ( tel que par exemple un dispositif de marque BIOSTYR) prévu à la sortie du décanteur, celui-ci étant alors constitué par un décanteur lamellaire 3a. Les boues de lavage du dispositif 9, peuvent être réacheminées grâce à une canalisation 10 vers le décanteur 3a.

Dans l'installation selon la figure 6, le dispositif à bactéries fixées est constitué par un dispositif à lit de sable 9a et est prévu entre le bassin aérobie 2 et un décanteur lamellaire 3a.

Les modes de réalisation du procédé ainsi que les installations décrits dans les exemples ci-dessus n'ont par pour objet de réduire la portée de l'invention. Il pourra donc y être apporté de nombreuses modifications sans sortir du cadre de celle-ci.

## Revendications

1. Procédé de traitement d'un effluent en vue de son épuration comprenant au moins une étape de traitement biologique dudit effluent conduisant à la production de boues biologiques, caractérisé en ce qu'il comprend au moins une étape consistant à faire subir à au moins une partie desdites boues provenant de ladite étape de traitement biologique une oxydation par voie humide mettant en oeuvre au moins un agent oxydant à une température comprise entre 80°C et 200°C et à une pression comprise entre 1 et 40 bar et une étape consistant à réacheminer au moins une partie des boues ainsi oxydées vers ladite étape de traitement biologique.

2. Procédé selon la revendication 1 caractérisé en ce que ladite étape d'oxydation par voie humide desdites boues est effectuée à une température comprise entre 120°C et 180°C.

3. Procédé selon la revendication 1 ou 2 caractérisé en ce que ladite étape d'oxydation par voie humide desdites boues est effectuée à une pression comprise entre 2 et 20 bar.

4. Procédé selon l'une quelconque des revendications 1 à 3 caractérisé en ce que la durée de ladite étape d'oxydation par voie humide est comprise entre environ 10 mn et environ 180 mn.

5. Procédé selon l'une quelconque des revendications 1 à 4 caractérisé en ce qu'il comprend une étape consistant à ajuster le pH desdites boues à une valeur comprise entre 1 et 11 préalablement à ladite étape d'oxydation.

6. Procédé selon l'une quelconque des revendications 1 à 5 caractérisé en ce que ledit agent oxydant est utilisé selon un rapport oxydant / demande chimique en oxygène (DCO) des boues compris entre 0.2 et 1.5 environ.

7. Procédé selon l'une quelconque des revendications 1 à 6 caractérisé en ce que ladite étape d'oxydation par voie humide est effectuée en présence d'au mois un catalyseur homogène.

8. Procédé selon la revendication 7 caractérisé en ce que ledit catalyseur est un métal choisi dans le groupe constitué par le manganèse, le fer, le cobalt, le nickel, le cuivre, le zinc et les mélanges et composés d'un ou plusieurs d'entre eux.

9. Procédé selon la revendication 8 caractérisé en ce que ledit catalyseur est un composé soluble du cuivre ou du zinc ou leur mélange.

10. Procédé selon l'une quelconque des revendications 1 à 9 caractérisé en ce qu'il comprend une étape consistant à réacheminer une partie des gaz d'oxydation produits lors de ladite étape d'oxydation par voie humide vers ladite étape de traitement biologique.

11. Procédé selon l'une quelconque des revendications 1 à 10 caractérisé en ce qu'il est effectué en mettant en oeuvre un taux de traitement des boues par ladite étape d'oxydation en milieu humide compris entre 1,1 et 2.

12. Procédé selon la revendication 11 caractérisé en ce que ledit taux de traitement est compris entre 1,1 et 1,5.

13. Procédé selon la revendication 12 caractérisé en ce que ledit taux de traitement est égal à 1,5.

14. Procédé selon l'une quelconque des revendications 1 à 13 caractérisé en ce que ladite étape de traitement biologique comprend au moins une étape aérobie.

15. Installation spécialement conçue pour la mise en oeuvre du procédé selon l'une des revendications 1 à 14 comprenant au moins un dispositif de traitement biologique (1) d'un effluent conduisant à la production de boues biologiques et des moyens d'évacuation d'au moins une partie desdites boues biologiques, caractérisée en ce que qu'elle comprend de plus au moins un réacteur d'oxydation par voie humide (6) d'au moins une partie desdites boues biologiques provenant dudit dispositif de traitement biologique, et des moyens de réacheminement (7) desdites boues oxydées vers ledit dispositif de traitement biologique.

16. Installation selon la revendication 15, caractérisée en ce que ledit dispositif de traitement biologique inclut au moins un bassin de boues activées (2) muni de moyens d'aération, au moins un dispositif de décantation (3,3a) de la liqueur mixte provenant dudit bassin de boues activées, et des moyens d'acheminement (11) d'au moins une partie des boues provenant dudit dispositif de décantation (3,3a) vers ledit réacteur d'oxydation par voie humide (6).

17. Installation selon la revendication 16 caractérisée en ce que ladite installation comprend au moins un dispositif à bactéries fixées (9,9a) mis en oeuvre pour nitrifier ledit effluent.

18. Installation selon la revendication 17 caractérisé en ce que ledit dispositif à bactéries fixées (9a) est prévu entre ledit bassin de boues activées et ledit dispositif de décantion.

19. Installation selon la revendication 17 caractérisée en ce que ledit dispositif à bactéries fixées (9) est prévu à la sortie dudit dispositif de de décantation.

20. Installation selon l'une des revendications 14 à 18 caractérisée en ce qu'elle inclut des moyens d'acheminent (8) d'au moins une partie des gaz d'oxydation provenant dudit réacteur d'oxydation par voie humide (6) vers ledit dispositif de traitement biologique (1).
